# EUROPÄISCHE PATENTSCHRIFT

(11) **EP 4 168 758 B1**
(45) Veröffentlichungstag und Bekanntmachung des Hinweises auf die Patenterteilung: **19.06.2024**
(21) Anmeldenummer: 21733787.2
(22) Anmeldetag: 16.06.2021
(51) Int. Cl.: G01F 23/296, G01N 9/00, G01N 11/16, G01F 1/84

(54) **VIBRONISCHER SENSOR**
VIBRONIC SENSOR
CAPTEUR VIBRONIQUE

(30) Priorität: 19.06.2020 DE 102020116281
(43) Veröffentlichungstag der Anmeldung: 26.04.2023
(73) Patentinhaber: Endress+Hauser SE+Co. KG, 79689 Maulburg (DE)
(72) Erfinder: BRENGARTNER, Tobias, 79312 Emmendingen (DE); SCHLEIFERBÖCK, Jan, 79595 Rümmingen (DE); MONSE, Benjamin, 79235 Vogtsburg (DE)
(74) Vertreter: Koslowski, Christine Adelheid
(86) Internationale Anmeldenummer: PCT/EP2021/066258
(87) Internationale Veröffentlichungsnummer: WO 2021/255102

(56) Entgegenhaltungen:
- WO-A2-2007/047524
- DE-A1-102014 119 061
- US-A1- 2007 186 678
- US-A1- 2011 288 795

## Beschreibung

Die Erfindung betrifft einen vibronischen Sensor zur Bestimmung und/oder Überwachung zumindest einer Prozessgröße eines Mediums mit den Merkmalen des Oberbegriffs des ersten bzw. vierten Anspruchs. Einen gattungsgemäßen Sensor offenbart die DE102014119061A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit oder um eine kombinierte Antriebs-/Empfangseinheit.

Sowohl das Anregesignal als auch das Empfangssignal sind charakterisiert durch ihre Frequenz, Amplitude und/oder Phase. Entsprechend werden Änderungen in diesen Größen üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Dabei ist die Antriebs-/Empfangseinheit üblicherweise Teil eines rückgekoppelten elektrischen Schwingkreises, mittels welchem die Anregung der mechanisch schwingfähigen Einheit zu mechanischen Schwingungen erfolgt. Zur Anregung wird häufig mittels eines Regelkreises ein vorgebbarer Wert für die Phasenverschiebung, also ein Sollwert für die Phasenverschiebung zwischen dem Anregesignal und dem Empfangssignal eingestellt. Beispielsweise muss für eine resonante Schwingung der Verstärkungsfaktor ≥1, und die Schwingkreisbedingung, gemäß welcher alle im Schwingkreis auftretenden Phasen ein Vielfaches von 360° ergeben, erfüllt sein. Aus dem Stand der Technik sind verschiedenste Verfahren zur Anregung der mechanisch schwingfähigen Einheit bzw. zur Einstellung einer vorgebbaren Phasenverschiebung bekannt geworden. Dabei kann grundsätzlich zwischen einer analogen und digitalen Anregung unterschieden werden, bei welcher der Schwingkreis aus analogen Komponenten, welche auf den jeweils verwendeten Typ von Sensor angepasst werden müssen, und digitalen Verfahren, welche im Prinzip universell einsetzbar sind, unterschieden werden.

Ein vielfach eingesetztes Anregungsprinzip beinhaltet, dass der Regelkreis zur Einstellung des vorgebbaren Werts für die Phasenverschiebung zwischen Anregesignal und Empfangssignal einen Verstärker und einen Phasenschieber, mittels welchem das Empfangssignal auf das Sendesignal zurückgekoppelt wird, umfasst. Gemäß der DE102006034105A1 wird beispielsweise ein einstellbarer Phasenschieber verwendet. Mittels einer Steuereinheit, welche die Frequenz des zuvor verstärkten Empfangssignals misst und mindestens ausgehend von hinterlegten Daten über die Frequenz-Phasen-Abhängigkeit einer Verstärkereinheit wird der Phasenschieber geregelt.

Aus der DE102007013557A1 ist ferner bekannt geworden, bei welchem der Verstärker einen einstellbaren Verstärkungsfaktor aufweist, welcher mittels einer Regeleinheit derart eingestellt wird, dass die Amplitude des Sendesignals im Wesentlichen innerhalb eines vorgebbaren Amplitudenbandes liegt.

Aus der DE102005015547A1 ist ein vibronischer Sensor bekannt geworden, bei welchem die Elektronikeinheit mindestens einen Allpass zur Einstellung des Sollwerts für die Phasenverschiebung vorgesehen ist. Der Allpass ändert bei konstanter Verstärkung in Abhängigkeit von der Frequenz die Phase eines elektrischen Signals. Insbesondere kann der Allpass derartig gesteuert oder geregelt werden, dass die Phase zwischen Anregesignal und Empfangssignal einstellbar ist. Vorzugsweise wird gemäß einer Ausgestaltung dieser Erfindung das Empfangssignal lediglich gefiltert und/oder verstärkt, bevor es dem Allpass zugeführt, von diesem verarbeitet und rückgeführt wird.

Bei einer analogen Anregung müssen jedoch zwangsläufig die verwendeten analogen Komponenten, aus welchen der Schwingkreis aufgebaut wird, auf den jeweils verwendeten Typ von Sensor angepasst werden. Weiterhin ist die Robustheit des Sensors, insbesondere in Hinblick auf Fremdvibrationen, von der Selektivität der jeweils verwendeten Filter zur Signalaufbereitung und/oder -auswertung abhängig, wobei die verwendeten Filter die Steigung des Phasengangs der Elektronikeinheit bestimmen. Umso größer die Steigung des Phasengangs, desto geringer ist der durch den Filter abzudeckende Frequenzbereich. Entsprechend kann es unter Umständen dazu kommen, dass der Sensor nicht mehr in Resonanz schwingt.

Aus der DE102009026685A1 ist ein Anregungsverfahren bekannt geworden, bei welchem die mechanisch schwingfähige Einheit wird mittels eines sogenannten Frequenzsuchlaufs innerhalb eines vorbestimmbaren Frequenzbandes im Arbeitsbereich der schwingfähigen Einheit sukzessive mit aufeinanderfolgenden diskreten Anregefrequenzen zu mechanischen Schwingungen angeregt und die entsprechenden Empfangssignale werden empfangen. Dabei wird mittels des Frequenzsuchlaufs diejenige Anregefrequenz ermittelt, bei welcher die schwingfähige Einheit mit einer Schwingungsfrequenz schwingt, die einem vorgebbaren Wert für die Phasenverschiebung entspricht. Mit dieser Anregefrequenz wird die schwingfähige Einheit jeweils beaufschlagt. Eine vorteilhafte Weiterbildung dieses Verfahrens ist Gegenstand der DE102009028022A1, in welcher die Auswertung des Empfangssignals dadurch vereinfacht wird, dass das Empfangssignal phasenselektiv nur zu bestimmten Zeitpunkten abgetastet und ausgewertet wird. Ähnlich wird in der DE102010030982A1 vorgeschlagen, das Empfangssignal zu bezüglich des Sendesignals vorgegebenen diskreten Zeitpunkten abzutasten, die abgetasteten Spannungswerte des Empfangssignals jeweils mit einem Sollwert zu vergleichen, welchen das Empfangssignal zu diesem Zeitpunkt annimmt, wenn der vorgebbare Wert für die Phasenverschiebung vorliegt, und im Falle einer Abweichung eines Spannungswertes von dem Sollwert ausgehend von dem Vorzeichen der Abweichung die Frequenz des Sendesignals zu verringern oder zu erhöhen.

Bei einer Anregung mittels eines Frequenzsuchlaufs und der Auswertung der jeweiligen Phasen- und/oder Amplituden der Empfangssignale muss jedoch beachtet werden, dass eine Abhängigkeit zwischen der Durchlaufgeschwindigkeit des Frequenzsuchlaufs und der Frequenzauflösung besteht.

Eine weitere digitale Möglichkeit, für einen vibronischen Sensor die Phasenverschiebung zwischen Anregesignal und Empfangssignal auf einen vorgebbaren Wert zu regeln, ist in der DE00102010030982A1 offenbart. Das dort beschriebene Verfahren basiert auf dem Funktionsprinzip einer Phasenregelschleife (engl. Phase-Locked-Loop, PLL). Dabei wird die Frequenz des Anregesignals derart eingestellt, dass ein vorgebbarer Wert für die Phasenverschiebung zwischen dem Anregesignal und dem Empfangssignal besteht.

Diese Art der Anregung weist gegenüber der Anregung mittels eines Frequenzsuchlaufs entscheidende Vorteile in Bezug auf die Auswertegeschwindigkeit auf. Allerdings wird jedoch zumindest ein Phasendetektor benötigt, welcher Einfluss auf die Robustheit, damit ist insbesondere unter anderem die Stabilität der Regelung beim Auftreten von Fremdvibrationen gemeint, wie auch auf die Genauigkeit des Regelkreises nimmt. Damit die Auswertung stabil erfolgen kann, muss ferner gewährleistet sein, dass die Amplitude des Anregesignals auf einen konstanten Wert gehalten wird.

Um Probleme beim Betreiben eines vibronischen Sensors beim Auftreten von Fremdvibrationen, wie beispielsweise Vibrationen von Pumpen oder auch Ultraschallbädern, zu reduzieren, schlägt die DE102012101667A1 vor, eine Regel-/Auswerteeinheit dazu zu konfigurieren, beim Vorliegen von zumindest einer Fremdvibration in Abhängigkeit der Frequenz und/oder der Amplitude der Fremdvibration die Schwingungsanregung derart zu steuern, dass das Empfangssignal von der Fremdvibration im Wesentlichen ungestört ist und/oder mindestens eine Frequenz einer Fremdvibration zu unterdrücken.

Um unabhängig von Störeinflüssen arbeiten zu können, ist in der bisher unveröffentlichten deutschen Patentanmeldung mit dem Aktenzeichen DE102014119061A1 ist ein vibronischer Sensor mit einer Elektronikeinheit bekannt geworden, welche ein adaptives Filter umfasst. Im laufenden Betrieb des vibronischen Sensors wird die Filtercharakteristik so eingestellt, dass eine Sollphasenverschiebung zwischen dem Anregesignal und dem Empfangssignal auftritt. Die DE102016111134A1 schlägt wiederum einen vibronischen Sensor mit einer Elektronikeinheit vor, die zumindest ein adaptives Filter aufweist. Es werden abwechselnd zwei unterschiedliche Betriebsmodi ausgeführt, wobei die mechanisch schwingfähige Einheit in einem ersten Modus zu mechanischen Schwingungen angeregt wird, und wobei die Schwingungen in einem zweiten Betriebsmodus unterbrochen werden und zumindest ein Wert einer Filtercharakteristik des adaptiven Filters derart eingestellt wird, dass eine vorgebbare Phasenverschiebung zwischen dem Anregesignal und dem Empfangssignal vorliegt. Auf diese beiden Anmeldungen wird im Folgenden vollumfänglich Bezug genommen.

Die WO 2007/047524 A2 offenbart ein Coriolis-Durchflussmessgerät, bei welchem anhand einer Quadratur-Demodulation eine Phasendifferenz zwischen zwei Signalen ermittelt wird.

Ausgehend vom genannten Stand der Technik liegt der vorliegenden Erfindung die Aufgabe zugrunde, einen vibronischen Sensor bereitzustellen, der sich durch eine hohe Messgenauigkeit und ein hohes Maß an Zuverlässigkeit auszeichnet.

Diese Aufgabe wird gelöst durch den vibronischen Sensor mit den Merkmalen des ersten Anspruchs.

Die Filtercharakteristik eines Filters beschreibt ganz allgemein das Verhalten des Filters, also dessen Filtereigenschaften, und ist durch die sogenannten Filteranforderungen, wie solche für den Durchlass-, und Sperrbereich, bestimmt. Gegebenenfalls beinhalten die Filteranforderungen ebenfalls Vorgaben bezüglich der Gruppenlaufzeit, des maximalen Überschwingens, der Flankensteilheit, der Mittenfrequenz, der Güte usw. Beispielsweise kann eine der bekannten Filtercharakteristiken Bessel, Legendre, Butterworth, Tschebyscheff, Gauss oder usw. verwendet werden. Je nach gewählter Filtercharakteristik wird für das Filter die Übertragungsfunktion, mittels welcher der Amplituden- und Phasenverlauf, sowie der Frequenzgang vollständig bestimmt sind, passend konzipiert.

Die Filtercharakteristik eines adaptiven Filters ist im Betrieb einstellbar. So können beispielsweise die Güte des Filters, welche mit der Bandbreite korreliert, sowie die Lage der Mittenfrequenz eingestellt werden. Entsprechend kann durch die Einstellung einer geeigneten Filtercharakteristik die Phasenverschiebung Φ_{Filter} zwischen dem Eingangs- und Ausgangssignal des Filters passend eingestellt werden. Als Konsequenz der Einstellung der Phasenverschiebung zwischen dem Eingangssignal und dem Ausgangssignal des Filters auf einen vorgebbaren Wert, stellt sich die Frequenz des Anregesignals derart ein, dass zwischen dem Anregesignal und Empfangssignal eine vorgebbare Phasenverschiebung von Φₛₒₗₗ =360°- Φ_{Filter} auftritt. Da es sich um ein adaptives, also mitführbares Filter, handelt, kann die Güte des Filters erhöht werden, ohne den jeweiligen Frequenzbereich einzuschränken, wie es für ein festes Filter der Fall wäre. Die Einstellung der vorgebbaren Phasenverschiebung über das Filter ist vorteilhaft weitgehend unabhängig von auftretenden Störeinflüssen, wie beispielsweise Fremdvibrationen, so dass der erfindungsgemäße vibronische Sensor besonders robust arbeitet.

Durch das adaptive Filter ist das Feldgerät für eine Vielzahl von Anwendungen einsetzbar. Beispielsweise kann das Feldgerät bei unterschiedlichen Phaseneinstellgenauigkeiten und damit einhergehend Arbeitsgeschwindigkeiten betrieben werden. Auch das Einstellen unterschiedlicher Werte für die vorgebbare Phasenverschiebung ist einfach realisierbar, und kann vorteilhaft auf Softwareebene erfolgen. Damit kann ein und dieselbe Elektronikeinheit und Anordnung für unterschiedliche vorgebbare Phasenverschiebungen verwendet werden. Die erfindungsgemäße Lösung lässt sich ferner vorteilhaft sowohl für digitale als auch für analoge Ausführungen des jeweiligen Schwingkreises zur Anregung der schwingfähigen Einheit anwenden und ist einfach auf unterschiedliche Sensoren, insbesondere unterschiedliche schwingfähige Einheiten anpassbar.

Die Quadraturdemodulation ist ein an sich aus dem Stand der Technik bekanntes Modulationsverfahren, in welchem eine Amplituden- und eine Phasenmodulation kombiniert werden. Es sind sowohl analoge als auch digitale auf der Quadraturmodulation beruhende Verfahren bekannt geworden. In Kombination mit einem vibronischen Sensor mit einer Elektronikeinheit mit einem adaptiven Filter, wie es für die vorliegende Erfindung der Fall ist, bietet diese Lösung den großen Vorteil, dass eine hochgenaue Detektion der Phasenverschiebung ermöglicht wird, welche zudem unabhängig von der jeweiligen Signalamplitude ist. In vielen Fällen von in Zusammenhang mit vibronischen Sensoren verwendeten Varianten bezüglich der Phasendetektion, insbesondere bei solchen die das Prinzip eines Lock-Ins, werden beispielsweise rechteckförmige Signale verwendet, um jeweils von der Signalamplitude unabhängig zu sein. Dies hat aber den nachteiligen Effekt, dass unerwünschte zusätzliche Phasenverschiebungen zwischen dem Anregesignal und Empfangssignal auftreten können, die die Messgenauigkeit negativ beeinflussen.

Hinsichtlich der ersten und zweiten Referenz-Einheit ist es von Vorteil, wenn diese dazu ausgestaltet sind, das erste Referenz-Signal und das zweite Referenz-Signal anhand des Empfangssignals zu erzeugen.

In einer Ausgestaltung des vibronischen Sensors ist die Elektronikeinheit dazu ausgestaltet, die Sollphasenverschiebung durch Einstellung der Mittenfrequenz des adaptiven Filters, insbesondere mittels einer Phasenregeleinheit, einzustellen. Die Mittenfrequenz wird also derart variiert, dass zwischen dem Anregesignal und dem Empfangssignal eine bestimmte, vorgebbare Phasenverschiebung vorliegt. In diesem Zusammenhang wird Bezug genommen auf die DE102014119061A1.

In einer weiteren Ausgestaltung des vibronischen Sensors beträgt die Sollphasenverschiebung 90°, 45°, oder 0°. Während eine vorgebbare Phasenverschiebung von 90° oder 0° abhängig von der Ausgestaltung der Sensoreinheit, insbesondere der Antriebs-/Empfangseinheit, zu einer resonanten Anregung der schwingfähigen Einheit führt, ist eine vorgebbare Phasenverschiebung von +/-45° ggf. für die Bestimmung der Dichte oder Viskosität zu bevorzugen.

Als adaptives Filter kommen unterschiedlichste Filter in Frage. Vorzugsweise handelt es sich bei dem ersten und/oder zweiten adaptiven Filter um einen Resonatorfilter oder um einen Bandpassfilter, insbesondere um einen Tiefpassfilter, insbesondere um einen Tiefpassfilter 2. Ordnung.

Noch eine Ausgestaltung des erfindungsgemäßen vibronischen Sensors beinhaltet, dass die Elektronikeinheit dazu ausgestaltet ist, abwechselnd einen ersten und einen zweiten Betriebsmodus auszuführen, wobei die Antriebs-/Empfangseinheit dazu ausgestaltet ist, während des ersten Betriebsmodus die mechanisch schwingfähige Einheit mittels eines elektrischen Anregesignals zu mechanischen Schwingungen anzuregen, wobei die Elektronikeinheit dazu ausgestaltet ist, während des zweiten Betriebsmodus
- die Anregung der mechanisch schwingfähigen Einheit mittels des Anregesignals zu unterbrechen,
- die mechanischen Schwingungen der mechanisch schwingfähigen Einheit zu empfangen und in ein elektrisches Empfangssignal umzuwandeln
- zumindest einen Wert einer Filtercharakteristik des adaptiven Filters derart einzustellen, dass eine vorgebbare Phasenverschiebung zwischen dem Anregesignal und dem Empfangssignal vorliegt, und
- aus dem Empfangssignal die zumindest eine Prozessgröße zu bestimmen.
In diesem Zusammenhang wird Bezug genommen auf DE102016111134A1.

Während des ersten Betriebsmodus, im Folgenden auch als Anrege-Sequenz bezeichnet, wird die mechanisch schwingfähige Einheit mittels der Antriebs-/Empfangseinheit zu mechanischen Schwingungen angeregt. Während des zweiten Betriebsmodus, auch als Mess-/Regel-Sequenz bezeichnet, wird die Anregung der schwingfähigen Einheit unterbrochen. Die Anrege- /Empfangseinheit wird also während des zweiten Betriebsmodus nicht mit dem elektrischen Anregesignal beaufschlagt. Während des zweiten Betriebsmodus schwingt die schwingfähige Einheit mit ihrer Eigenfrequenz in Form einer gedämpften Schwingung weiter. Die Schwingungen werden in ein elektrisches Empfangssignal umgewandelt, aus welchem wiederum die zumindest eine Prozessgröße bestimmt und die aktuelle Phasenverschiebung zwischen dem Anregesignal und dem Empfangssignal durch passende Einstellung, zumindest der Filtercharakteristik, auf einen vorgebbaren Wert, bzw. eine vorgebbare Phasenverschiebung, geregelt wird. Das Anregesignal wird also ausgehend vom Empfangssignal erzeugt. Ein entscheidender Vorteil in diesem Zusammenhang liegt darin, dass die Detektion der mechanischen Schwingungen in Form des Empfangssignals und dessen Auswertung unabhängig vom Anregesignal erfolgen können. Dies ist insbesondere von Vorteil, wenn, beispielsweise konstruktionsbedingt, Kopplungen zwischen dem Anregesignal und dem Empfangssignal auftreten können. Dies ist beispielsweise dann der Fall, wenn eine Überlagerung des Anregesignals und Empfangssignals stattfindet.

Bei der Prozessgröße handelt es sich beispielsweise um einen, insbesondere vorgebbaren, Füllstand, die Dichte oder die Viskosität des Mediums in dem Behältnis. Die schwingfähige Einheit des vibronischen Sensors kann beispielsweise in Form einer Membran, eines Einstabs oder einer Schwinggabel ausgestaltet sein. Bei der Antriebs-/Empfangseinheit wiederum kann es sich insbesondere um eine elektromagnetische oder um eine piezoelektrische Antriebs-/Empfangseinheit handeln.

Bei dem Anregesignal kann es sich um ein periodisches Signal, beispielsweise ein Dreiecksignal, ein Sinussignal oder ein Rechtecksignal, handeln. Bevorzugt führt die schwingfähige Einheit im eingeregelten Zustand resonante Schwingungen in der Grundschwingungsmode aus.

Die Erfindung sowie ihre vorteilhaften Ausgestaltungen werden nachfolgend anhand der Figuren Fig. 1 bis Fig. 3 näher beschrieben. Es zeigt:
Fig. 1: eine schematische Skizze eines vibronischen Sensors gemäß Stand der Technik,
Fig. 2: ein Blockschaltbild einer ersten Ausgestaltung einer erfindungsgemäßen Elektronikeinheit, und
Fig. 3: ein Blockschaltbild einer weiteren Ausgestaltung einer erfindungsgemäßen Elektronikeinheit zur Illustration der Durchführung zweier Betriebsmodi.

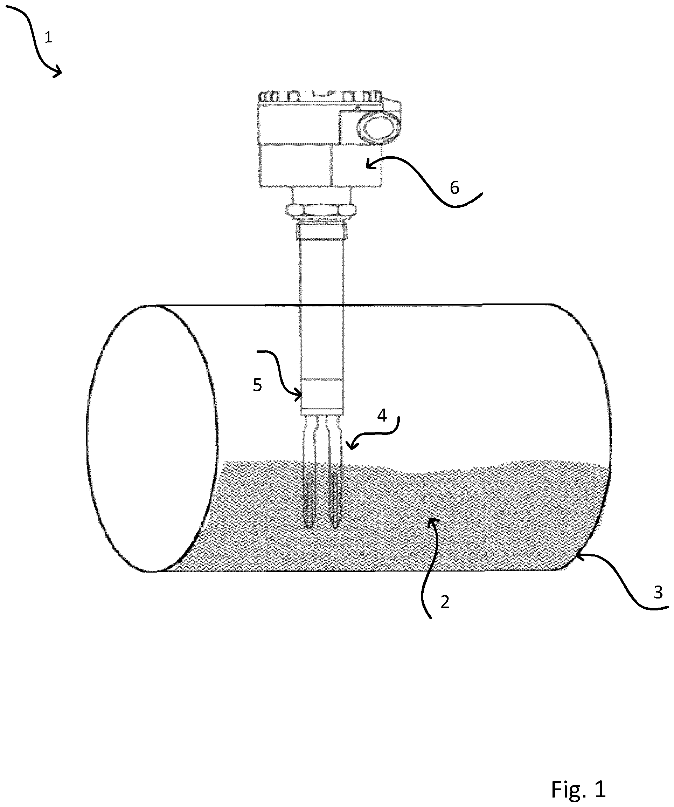

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

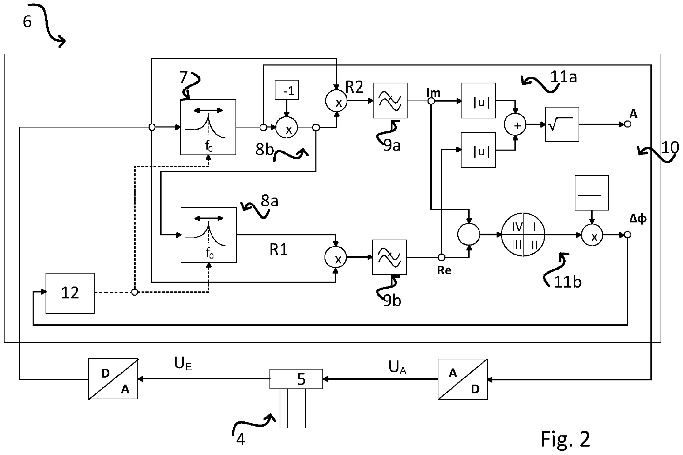

Ein Blockschaltbild einer ersten beispielhaften Ausgestaltung für eine erfindungsgemäße Elektronikeinheit ist Gegenstand von Fig. 2.

Die schwingfähige Einheit 4 wird mittels des Anregesignals U_{A} zu mechanischen Schwingungen angeregt. Das diese Schwingungen repräsentierende Empfangssignal Uε durchläuft zuerst einen Analog-Digital Wandler D/A, bevor es dem ersten adaptiven Filter 7 zugeführt wird. Im fortlaufenden Betrieb wird die Filtercharakteristik des adaptiven Filters 7 so eingestellt, dass eine vorgebbare Phasenverschiebung Φₛₒₗₗ=360°- Φ_{Filter} zwischen dem Anregesignal U_{A} und dem Empfangssignal U_{E} vorliegt, wobei Φ_{filter} die Phasenverschiebung zwischen dem Eingangssignal und dem Ausgangssignal des adaptiven Filters 7 ist. Anhand der jeweils detektierten Phasenverschiebung ΔΦ wird mittels einer Regeleinheit 12 die Phase dann passend geregelt. Für weitere Details zu einer Einstellung der Sollphasenverschiebung Φₛₒₗₗ mittels eines adaptiven Filters 7 sei auf die DE102014119061A1 verwiesen.

Mittels der Detektionseinheit 10 wird die Amplitude 11a des Empfangssignals Uε und die Phasenverschiebung 11b ΔΦ zwischen dem Anregesignal U_{A} und dem Empfangssignal ermittelt. Erfindungsgemäß ist die Detektionseinheit 10 dazu ausgestaltet, die Phasenverschiebung ΔΦ anhand einer Quadratur-Demodulation zu ermitteln. Auf diese Weise kann eine hohe Genauigkeit hinsichtlich der Bestimmung erreicht werden, welche Bestimmung zudem vorteilhaft unabhängig von den jeweiligen Signalamplituden ist. Vor Eintritt in die Detektionseinheit 10 durchlaufen die jeweiligen Eingangssignale hier jeweils einen an sich optionalen Tiefpassfilter 9a,9b.

Zur Detektion der Phase ΔΦ mittels der Quadratur-Demodulation bedarf es zweier Referenzsignale R1, R2, welche im für die hier gezeigte Ausgestaltung vorteilhaft anhand des Empfangssignals U_{E} erzeugt werden. Es bedarf also vorteilhaft zur Erzeugung der Referenzsignale R1, R2 keiner weiteren Signalquellen. Die Referenzsignale R1, R2 auf besonders einfache Art und Weise möglich. Eine erste Referenz-Einheit 8a dient dazu, ein erstes Referenzsignal R1 mit einer Phasenverschiebung von +90° gegenüber dem Empfangssignal U_{E} zu erzeugen und umfasst zu diesem Zweck hier beispielhaft ein zweites adaptives Filter, welches baugleich zum ersten adaptiven Filter 7 ausgestaltet ist. Alternativ können aber auch andere Elemente zum Einsatz kommen, welche nicht baugleich zum ersten adaptiven Filter 7 ausgestaltet sind, beispielsweise kann auch ein adaptives Bandpassfilter verwendet werden. Auch kann die erste Referenz-Einheit 8a mehrere Bauelemente umfassen, um eine Phasenverschiebung von +/- 90° zu erzeugen.

Eine zweite Referenz-Einheit 8b dient dazu, ein zweites Referenzsignal R2 mit einer Phasenverschiebung von 0° gegenüber dem Empfangssignal U_{E} zu erzeugen und umfasst zu diesem Zweck hier einen Multiplikator. Auch hier sei wieder darauf verwiesen, dass zahlreiche weitere Alternativen zur Verfügung stehen, die dem Fachmann geläufig sind.

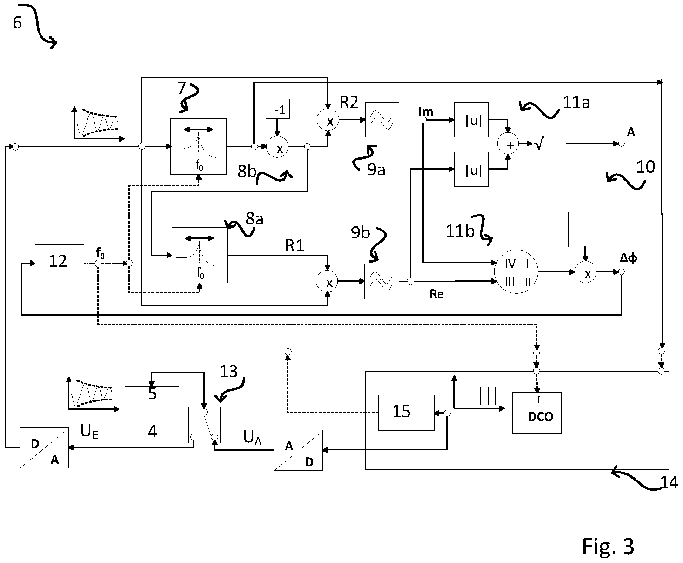

Eine weitere beispielhafte Ausgestaltung einer erfindungsgemäßen Elektronikeinheit 6 ist Gegenstand von Fig. 3. Für diese Ausgestaltung werden zwei verschiedene Betriebsmodi durchgeführt, wobei die Elektronikeinheit 6 zum Hin- und Herschalten zwischen den beiden Betriebsmodi ein Schaltelement 13 umfasst.

Hinsichtlich der Durchführung zweier Betriebsmodi sei auf die DE102016111134A1 verwiesen. Im ersten Betriebsmodus, auch als Anrege-Sequenz bezeichnet, wird die schwingfähige Einheit 4 mit einem Anregesignal U_{A} beaufschlagt und zu mechanischen Schwingungen angeregt. Die schwingfähige Einheit 4 speichert auf diese Weise also Schwingungsenergie. Das von der schwingfähigen Einheit 4 kommende Empfangssignal U_{E} ist dem Anregesignal U_{A} überlagert. Während der Anrege-Sequenz findet keine aktive Messung bzw. Einstellung bezüglich der aktuell vorliegenden Phasenverschiebung ΔΦ zwischen dem Anregesignal U_{A} und Empfangssignal U_{E} vorgenommen. Die Filtercharakteristik des adaptiven Filters 7 bleibt konstant.

Während des zweiten Betriebsmodus 16, auch als Mess-/Regel-Sequenz bezeichnet, wird mittels des Schaltelements 13 die Beaufschlagung Sensoreinheit 4,5 mittels des Anregesignals U_{A} unterbrochen. Die schwingfähige Einheit 4 schwingt nun mit ihrer Eigenresonanzfrequenz f₀ und führt entsprechend eine gedämpfte Resonanzschwingung aus. Das Anregesignal U_{A} ist nun dem Empfangssignal Uε nicht mehr überlagert, so dass eine geeignete Signalauswertung in einer dazu ausgestalteten Auswerteeinheit 14 der Elektronikeinheit 6 erfolgen kann, welche hier beispielhaft einen digital gesteuerten Oszillator DCO und eine Einheit zur Detektion eines Nulldurchgangs 15 aufweist. Die Regelung der aktuellen Phasenverschiebung ΔΦ zwischen Anregesignal U_{A} und Empfangssignal Uε wird fortgesetzt. Beispielsweise kann zur Regelung der aktuellen Phasenverschiebung ΔΦ die Mittenfrequenz fₘ des adaptiven Filters 7 passend eingestellt werden. Während der aufeinanderfolgenden Mess-/Regel-Sequenzen werden also verschiedene interne Parameter und/oder Werte der für die Regelung und Phasenmessung sukzessive geändert, bis beispielsweise eine resonante Anregung der Sensoreinheit 4,5 erfolgt.

### Bezugszeichenliste

- 1: Vibronischer Sensor
- 2: Medium
- 3: Behälter
- 4: Schwingfähige Einheit
- 5: Elektromechanische Wandlereinheit
- 6: Elektronikeinheit
- 7: adaptives Filter
- 8, 8a,8b: Referenz-Einheiten
- 9, 9a,9b: Tiefpassfilter
- 10: Detektionseinheit
- 11a, 11b: Detektion von Amplitude (a) und Phase (b)
- 12: Regeleinheit
- 13: Schaltelement
- 14: Auswerteeinheit
- 15: Einheit zur Detektion eines Nulldurchgangs

- U_{A}: Anregesignal
- U_{E}: Empangssignal
- fₘ: Mittenfrequenz des adaptiven Filters
- f₀: Resonanzfrequenz der schwingfähigen Einheit
- Aₗ: Amplitude
- ΔΦ: Phasenverschiebung
- Φₛₒₗₗ: vorgebbare Phasenverschiebung zwischen Anregesignal und Empfangssignal
- Φ_{filter}: Phasenverschiebung zwischen Eingangssignal und Ausgangssignal des adaptiven Filters

## Patentansprüche

1. Vibronischer Sensor (1) zur Bestimmung und/oder Überwachung zumindest einer Prozessgröße eines Mediums (2) in einem Behältnis (3) zumindest umfassend eine mechanisch schwingfähige Einheit (4), eine Antriebs-/Empfangseinheit (5) und eine Elektronikeinheit (6),
wobei die Antriebs-/Empfangseinheit (5) dazu ausgestaltet ist, mittels eines elektrischen Anregesignals (U_{A}) die mechanisch schwingfähige Einheit (4) zu mechanischen Schwingungen anzuregen, und die mechanischen Schwingungen der mechanisch schwingfähigen Einheit (4) zu empfangen und in ein elektrisches Empfangssignal (U_{E}) umzuwandeln,
wobei die Elektronikeinheit (6) dazu ausgestaltet ist, das Anregesignal (U_{A}) ausgehend vom Empfangssignal (U_{E}) zu erzeugen, und aus dem Empfangssignal (U_{E}) die zumindest eine Prozessgröße zu bestimmen,
wobei die Elektronikeinheit (6) ein erstes adaptives Filter (7) umfasst, und
wobei die Elektronikeinheit (6) dazu ausgestaltet ist, die Filtercharakteristik des adaptiven Filters (7) derart einzustellen, dass eine Sollphasenverschiebung (ΔΦₛₒₗₗ) zwischen dem Anregesignal (U_{A}) und dem Empfangssignal (U_{E}) auftritt,
**gekennzeichnet dadurch,**
**dass** der Sensor (1) eine Detektionseinheit (10) aufweist, die dazu ausgestaltet ist, anhand einer Quadratur-Demodulation eine Phasenverschiebung (ΔΦ) zwischen dem Anregesignal (U_{A}) und dem Empfangssignal und/oder eine Amplitude (A) des Empfangssignals (U_{E}) zu bestimmen,
**dass** die Detektionseinheit (10) eine erste Referenz-Einheit (8a) und eine zweite Referenz-Einheit (8b) zur Erzeugung eines ersten Referenzsignals (R1) und eines zweiten Referenzsignals (R2) zur Durchführung der Quadratur-Demodulation umfasst, dass eine der beiden Referenz-Einheiten (8) einen ersten Phasenschieber zur Erzeugung eines der Referenzsignale (R) mit einer Phasenverschiebung von +/- 90° gegenüber dem Empfangssignal (U_{E}) umfasst, wobei es sich bei dem ersten Phasenschieber um ein zweites adaptives Filter oder um ein Allpassfilter oder um einen Hilbert-Transformator handelt,
und/oder
**dass** eine der beiden Referenz-Einheiten (8) einen zweiten Phasenschieber zur Erzeugung eines der Referenzsignale (R) mit einer Phasenverschiebung von 0° gegenüber dem Empfangssignal (U_{E}) umfasst, wobei es sich bei dem zweiten Phasenschieber um einen Multiplikator oder um ein adaptives Filter handelt.

2. Vibronischer Sensor (1) nach Anspruch 1,
wobei die erste Referenz-Einheit (8a) und die zweite Referenz-Einheit (8b) dazu ausgestaltet sind, das erste Referenz-Signal (R1) und das zweite Referenz-Signal (R2) anhand des Empfangssignals (U_{E}) zu erzeugen.

3. Vibronischer Sensor (1) nach Anspruch 1 oder 2,
wobei es sich bei dem ersten Phasenschieber um ein zweites adaptives Filter handelt, welches baugleich zum ersten adaptiven Filter (7) ausgestaltet ist.

4. Vibronischer Sensor (1) nach einem der Ansprüche 1 bis 3,
wobei es sich bei dem zweiten Phasenschieber um einen Resonatorfilter handelt.

5. Vibronischer Sensor (1) nach einem der Ansprüche 1 bis 4,
wobei die Elektronikeinheit (6) dazu ausgestaltet ist, die Sollphasenverschiebung (ΔΦₛₒₗₗ) durch Einstellung der Mittenfrequenz (fₘ) des adaptiven Filters (7), insbesondere mittels einer Phasenregeleinheit, einzustellen.

6. Vibronischer Sensor (1) nach einem der Ansprüche 1 bis 5,
wobei die Elektronikeinheit (6) dazu ausgestaltet ist, abwechselnd einen ersten und einen zweiten Betriebsmodus auszuführen,
wobei die Antriebs-/Empfangseinheit (5) dazu ausgestaltet ist, während des ersten Betriebsmodus die mechanisch schwingfähige Einheit (4) mittels eines elektrischen Anregesignals (U_{A}) zu mechanischen Schwingungen anzuregen,
wobei die Elektronikeinheit (6) dazu ausgestaltet ist, während des zweiten Betriebsmodus
- die Anregung der mechanisch schwingfähigen Einheit (4) mittels des Anregesignals (U_{A}) zu unterbrechen,
- die mechanischen Schwingungen der mechanisch schwingfähigen Einheit (4) zu empfangen und in ein elektrisches Empfangssignal (U_{E}) umzuwandeln,
- zumindest einen Wert einer Filtercharakteristik des adaptiven Filters (7) derart einzustellen, dass eine vorgebbare Phasenverschiebung (ΔΦₛₒₗₗ) zwischen dem Anregesignal (U_{A}) und dem Empfangssignal (U_{E}) vorliegt, und
- aus dem Empfangssignal (U_{E}) die zumindest eine Prozessgröße zu bestimmen.

## Claims

1. A vibronic sensor (1) for determining and/or monitoring at least one process variable of a medium (2) in a container (3), comprising at least one mechanically resonant unit (4), one drive/receiver unit (5), and one electronic unit (6),
wherein the drive/receiver unit (5) is configured to excite the mechanically resonant unit (4) to mechanical vibrations using an electrical excitation signal (U_{A}), as well as to receive the mechanical vibrations of the mechanically resonant unit (4) and convert them into an electrical reception signal (U_{E}),
wherein the electronic unit (6) is configured to generate the excitation signal (U_{A}) on the basis of the reception signal (U_{E}) and then determine the at least one process variable from the reception signal (U_{E}),
wherein the electronic unit (6) comprises a first adaptive filter (7), and wherein the electronic unit (6) is configured to adjust the filter characteristics of the adaptive filter (7) in such a way that a targeted phase shift (ΔΦₛₒₗₗ) occurs between the excitation signal (U_{A}) and the reception signal (U_{E}),
**characterized in that**
the sensor exhibits a detection unit (10) that is configured to determine a phase shift (ΔΦ) between the excitation signal (U_{A}) and the reception signal and/or an amplitude (A) of the reception signal (U_{E}) on the basis of a quadrature demodulation,
the detection unit (10) comprises a first reference unit (8a) and a second reference unit (8b) for generating a first reference signal (R1) and a second reference signal (R2) for performing the quadrature demodulation, and one of the two reference units (8) comprises a first phase shifter for generating one of the reference signals (R) with a phase shift of +/- 90° relative to the reception signal (U_{E}), wherein the first phase shifter is a second adaptive filter or an allpass filter or a Hilbert transformer,
and/or that
one of the two reference units (8) comprises a second phase shifter for generating one of the reference signals (R) with a phase shift of 0° relative to the reception signal (U_{E}), wherein the second phase shifter is a multiplier or an adaptive filter.

2. A vibronic sensor (1) according to claim 1,
wherein the first reference unit (8a) and the second reference unit (8b) are configured to generate the first reference signal (R1) and the second reference signal (R2) on the basis of the reception signal (U_{E}).

3. A vibronic sensor (1) according to claim 1 or 2,
wherein the first phase shifter is a second adaptive filter that is identical in design to the first adaptive filter (7).

4. A vibronic sensor (1) according to one of the claims 1 to 3,
wherein the second phase shifter is a resonator filter.

5. A vibronic sensor (1) according to one of the claims 1 to 4,
wherein the electronic unit (6) is configured to set the targeted phase shift (ΔΦₛₒₗₗ) by adjusting the center frequency (fₘ) of the adaptive filter (7), in particular using a phase control unit.

6. A vibronic sensor (1) according to one of the claims 1 to 5,
wherein the electronic unit (6) is configured to execute a first and a second operating mode in alternation,
wherein the drive/receiver unit (5) is configured to excite mechanical vibrations in the mechanically resonant unit (4) using an electrical excitation signal (U_{A}) during the first operating mode,
wherein the electronic unit (6) is configured to do the following during the second operating mode:
- interrupt the excitation of the mechanically resonant unit (4) via the excitation signal (U_{A}),
- receive the mechanical vibrations of the mechanically resonant unit (4) and convert them into a first received signal (U_{E}),
- adjust at least one value of a filter characteristic of the adaptive filter (7) in such a way that a definable phase shift (ΔΦₛₒₗₗ) is present between the excitation signal (U_{A}) and the reception signal (U_{E}), and
- determine the at least one process variable from the reception signal (U_{E}).

## Revendications

1. Capteur vibronique (1) destiné à la détermination et/ou à la surveillance d'au moins une grandeur de process d'un produit (2) dans un réservoir (3), lequel capteur comprend au moins une unité apte à vibrer mécaniquement (4), une unité d'entraînement / de réception (5) et une unité électronique (6),
l'unité d'entraînement / de réception (5) étant conçue pour exciter l'unité apte à vibrer mécaniquement (4) en vibrations mécaniques au moyen d'un signal d'excitation électrique (U_{A}), et pour recevoir les vibrations mécaniques de l'unité apte à vibrer mécaniquement (4) et les convertir en un signal de réception électrique (U_{E}),
l'unité électronique (6) étant conçue pour générer le signal d'excitation (U_{A}) à partir du signal de réception (U_{E}), et pour déterminer l'au moins une grandeur de process à partir du signal de réception (U_{E}),
l'unité électronique (6) comprenant un premier filtre adaptatif (7), et
l'unité électronique (6) étant conçue pour régler la caractéristique de filtrage du filtre adaptatif (7) de telle sorte qu'il se produise un déphasage de consigne (ΔΦₛₒₗₗ) entre le signal d'excitation (U_{A}) et le signal de réception (U_{E}),
**caractérisé**
**en ce que** le capteur (1) présente une unité de détection (10), laquelle est conçue pour déterminer, à l'aide d'une démodulation en quadrature, un déphasage (ΔΦ) entre le signal d'excitation (U_{A}) et le signal de réception et/ou une amplitude (A) du signal de réception (U_{E}),
**en ce que** l'unité de détection (10) comprend une première unité de référence (8a) et une deuxième unité de référence (8b) destinées à générer respectivement un premier signal de référence (R1) et un deuxième signal de référence (R2) pour réaliser la démodulation en quadrature,
**en ce que** l'une des deux unités de référence (8) comprend un premier déphaseur destiné à générer l'un des signaux de référence (R) avec un déphasage de +/-90° par rapport au signal de réception (U_{E}), le premier déphaseur étant un deuxième filtre adaptatif ou un filtre passe-tout ou un transformateur de Hilbert, et/ou
**en ce que** l'une des deux unités de référence (8) comprend un deuxième déphaseur destiné à générer l'un des signaux de référence (R) avec un déphasage de 0° par rapport au signal de réception (U_{E}), le deuxième déphaseur étant un multiplicateur ou un filtre adaptatif.

2. Capteur vibronique (1) selon la revendication 1,
pour lequel la première unité de référence (8a) et la deuxième unité de référence (8b) sont conçues pour générer le premier signal de référence (R1) et le deuxième signal de référence (R2) à l'aide du signal de réception (U_{E}).

3. Capteur vibronique (1) selon la revendication 1 ou 2,
pour lequel le premier déphaseur est un deuxième filtre adaptatif, lequel deuxième filtre est de conception identique au premier filtre adaptatif (7).

4. Capteur vibronique (1) selon l'une des revendications 1 à 3,
pour lequel le deuxième déphaseur est un filtre à résonateur.

5. Capteur vibronique (1) selon l'une des revendications 1 à 4,
pour lequel l'unité électronique (6) est conçue pour régler le déphasage de consigne (ΔΦₛₒₗₗ) en réglant la fréquence centrale (fₘ) du filtre adaptatif (7), notamment au moyen d'une unité de réglage de phase.

6. Capteur vibronique (1) selon l'une des revendications 1 à 5,
pour lequel l'unité électronique (6) est configurée pour exécuter alternativement un premier et un deuxième mode de fonctionnement,
l'unité d'entraînement / de réception (5) étant conçue pour exciter l'unité apte à vibrer mécaniquement (4) en vibrations mécaniques au moyen d'un signal d'excitation électrique (U_{A}) pendant le premier mode de fonctionnement,
l'unité électronique (6) étant conçue, pendant le deuxième mode de fonctionnement, pour
- interrompre l'excitation de l'unité apte à vibrer mécaniquement (4) au moyen du signal d'excitation (U_{A}),
- recevoir les vibrations mécaniques de l'unité apte à vibrer mécaniquement (4) et pour les convertir en un signal de réception électrique (U_{E}),
- régler au moins une valeur d'une caractéristique de filtrage du filtre adaptatif (7) de telle sorte qu'il existe un déphasage (ΔΦₛₒₗₗ) prédéfinissable entre le signal d'excitation (U_{A}) et le signal de réception (U_{E}), et pour
- déterminer l'au moins une grandeur de process à partir du signal de réception (U_{E}).
